# EUROPEAN PATENT SPECIFICATION

(11) **EP 0 675 792 B1**
(45) Date of publication and mention of the grant of the patent: **19.03.1997**
(21) Application number: 94901941.8
(22) Date of filing: 30.11.1993
(51) Int. Cl.: B29C 41/18, B29C 41/22, B29C 41/38, B29C 33/00

(54) **GASKET FOR A MOULD FOR SLUSH MOULDING ARTICLES, SUCH AS SIMULATED LEATHER OR THE LIKE AND A MOULDING APPARATUS WHICH USES IT**
DICHTUNG FÜR EINE FORM ZUM GIESSEN VON GEGENSTÄNDEN WIE KUNSTLEDER ODER ÄHNLICHES UND DAZUGEHÖRENDE FORMVORRICHTUNG
JOINT POUR MOULE DE MOULAGE PAR EMBOUAGE DE PIECES TELLES QUE DES PRODUITS EN SIMILICUIR OU ANALOGUE, ET APPAREIL DE MOULAGE LE METTANT EN OEUVRE

(30) Priority: 01.12.1992 IT MI922752
(43) Date of publication of application: 11.10.1995
(73) Proprietor: INDUSTRIE ILPEA S.p.A., I-21023 Malgesso (Varese) (IT)
(72) Inventor: BUZZONI, Giancarlo, I-21020 Barasso (IT); CITTADINI, Paolo, I-21020 Luvinate (IT)
(74) Representative: Appoloni, Romano
(86) International application number: EP9303377
(87) International publication number: WO9412331

(56) References cited:
- EP-A- 0 339 222
- EP-A- 0 422 473
- EP-A- 0 476 742
- DE-A- 4 101 831
- US-A- 5 033 954

## Description

European patent application No. 476,742 of the present applicant relates to a method for slush moulding articles of two or more colours such as simulated leather products or the like from materials such as thermoplastic, thermosetting and elastomeric resins in powder form, comprising the steps of moulding a gasket having the profile of said mould along that line thereof which defines on the moulded article the corresponding separation line between two different colours; providing on the inside of the mould along the separation line at least one separation wall to thus define two separated half-spaces inside the mould; fixing the gasket onto the separation wall in proximity to the mould to hence form a seal within the mould between said two half-spaces; slush moulding a layer of a first material constituting the first of said colours, said layer adhering to the mould only on the walls of the first half-space defined within it; consolidating the layer of said first material adhering to the mould, removing the separation wall and the relative gasket from the mould, and finally by means of slush moulding forming in the mould a continuous layer of a second material constituting the second of said colours, and so on according to the number of colours required.

In some most recent practical applications of this method, the shape of the finished article has gradually assumed more complex forms, particularly in motor vehicle applications for the manufacture of internal parts such as dash panels and linings.

Consequently said separation line between the two colours of the finished article, and hence the corresponding mould profile and gasket, have to follow a rather complex pattern, often comprising grooves, projections and undercuts.

In particular, during the moulding process in which the mould is brought into contact with the separation wall carrying the gasket, it has been found very difficult to adapt the gasket to a mould profile comprising one or more undercuts.

In some cases it is found impossible to adapt the gasket to certain undercut regions of the mould in a manner which ensures a seal during moulding, if the mould profile in that region is complex.

For these reasons the object of the present invention is to improve the method described in the aforesaid European patent application such as to effectively solve the technical problem of providing an optimum gasket seal even for complex mould shapes, and in particular those with an undercut profile.

This object and further advantages which will be apparent hereinafter are attained according to the present invention by a gasket having the profile of a mould for slush moulding articles of two or more colours such as simulated leather products or the like from materials chosen from thermoplastic, thermosetting and elastomeric resins in powder form, said profile being that along that line of the mould which defines on the moulded article the corresponding separation line between two different colours, said gasket being fixed to a separation wall which defines two separated half-spaces within the mould, characterised in that a plurality of rigid material inserts are arranged in said gasket in a predetermined distribution, each being independently controlled by an actuator device to enable the gasket to undergo expansion or retraction movements by operating said inserts.

The characteristics and advantages of the invention will be more apparent from the description of one embodiment thereof given hereinafter with reference to the figures of the accompanying drawings.

The embodiment is in no way to be considered as limitative of the scope of the patent.

Figure 1 is a partly sectional view of a moulding apparatus suitable for implementing the method of the invention, in that operating position in which the mould is not engaged with the gasket.

Figure 2 shows a detail of Figure 1.

Figure 3 shows a detail of the apparatus of Figure 1 in a different operating position in which the mould is engaged with the gasket.

Figure 4 is a section on the line IV-IV of Figure 3.

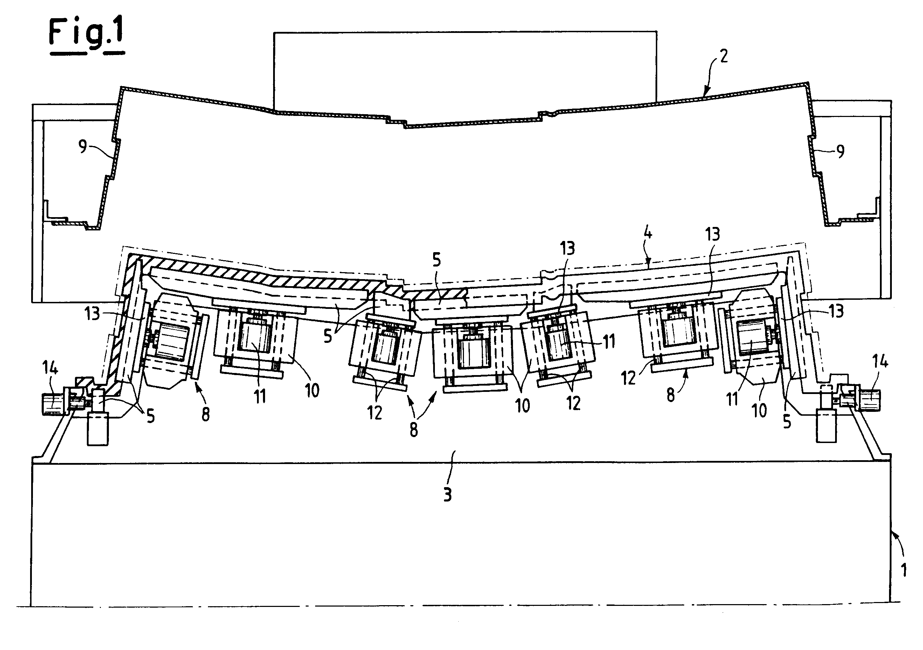

In Figure 1 the reference numeral 1 indicates a slush moulding tank faced by a mould 2 shown in a position in which it is undergoing translational movement.

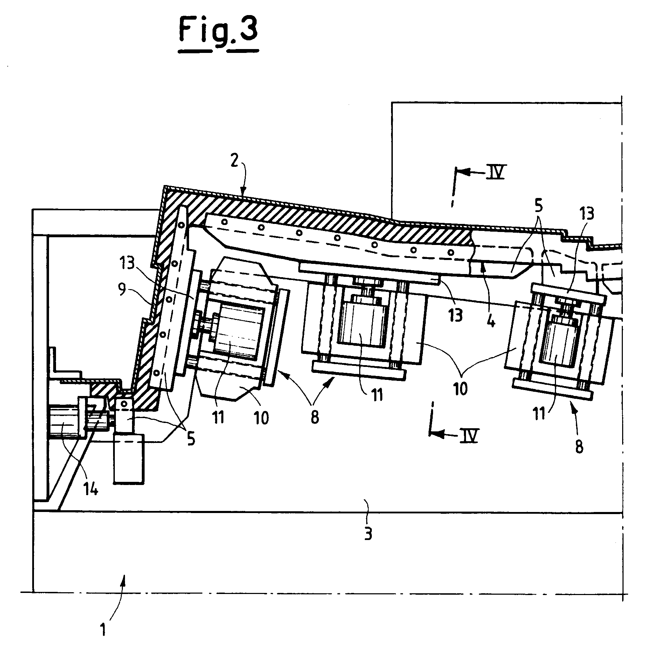

The tank is divided longitudinally into two parts by a vertical wall 3 which extends into the tank and, when in the closure position shown in Figure 3, also extends into the overlying mould so as to define in this latter two half-spaces indicated by 6 and 7 in Figure 4.

Along the entire edge of the separation wall 3 facing the mould 2 there is fixed a gasket 4 for sealing between said two half-spaces 6 and 7.

This gasket has the same profile as the mould 2 along that line on the mould which defines on the final moulded article the corresponding separation line between two different colours deriving from suitable plastics powder contained in said tank 1.

The gasket 4 is provided with a plurality of inserts 5 of rigid material, such as metal, of different shapes and dimensions depending on the point in which they are inserted into the gasket.

The distribution of these inserts within the gasket is determined by its shape.

Each of the inserts is independently supported and controlled by actuator 8 devices which can be either mechanical, hydraulic or pneumatic.

As will be more apparent from the sectional view of Figure 4, each of said actuators 8 consists of a casing 10 rigid with the wall 3 and housing a piston 11 with guide rods 12 and operating a plate 13 fixed to the inserts 5, which are embedded in the gasket 4 and project lowerly from them.

Actuators 14 are also provided in the perimetral region of the tank 3 to control the movement of the inserts in the end region of the gasket.

The seal between the separation wall 3 and the gasket 4 in the region in which the actuator acts is achieved by an elastic seal such as a bellows wall 15.

The operation of the structure as mounted in the aforedescribed figures is substantially as follows: when the separation line between the two colours has been defined in the finished article in accordance with production requirements, this separation line must exactly correspond in form and pattern to the profile of the mould 2 in that region in which the gasket 4 is to be mounted.

This gasket can either be moulded in a separate mould or be formed directly in the mould 2 in the region in which the separation line between the two different colours is defined.

The gasket 4 is formed by casting liquid silicon rubber after embedding the inserts 5 in it before moulding, these inserts having a shape, size and distribution determined by the pattern of the profile of the mould with which the gasket 4 is to mate.

The gasket is then associated with the separation wall 3 of the tank 1 carrying the actuator means 8, in the manner essentially shown in Figure 4.

Figure 1 shows the relative positions of the mould 2 and tank 1 carrying the gasket 4 in the initial operating stage, in which the mould is descending onto the tank 1.

In this operating stage, in Figure 1 the gasket 4 is shown by full lines in a position in which it is retracted from its normal position, which is instead shown by dashed and dotted lines (substantially equivalent to the mould position after closure).

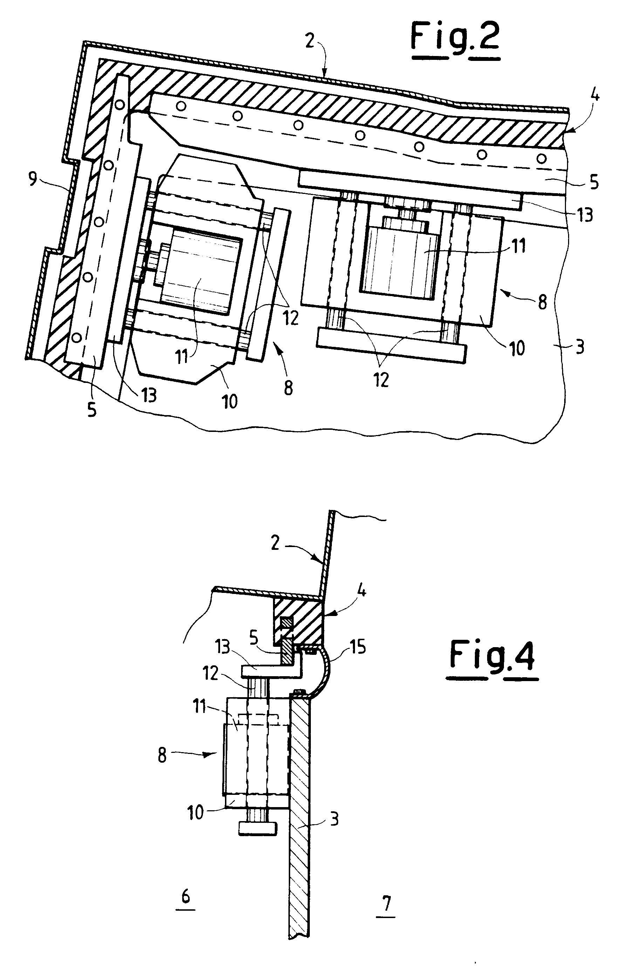

This retracted position is achieved by operating the actuator devices 8 so that they move into their contracted position shown in Figure 2.

In the embodiment shown in the figures, the profile of the mould 2 which is to mate with the gasket 4 comprises various undercut regions indicated by 9.

It will be apparent that if the mould 2 were to be mounted on the separation wall 3 of the tank 1 without first retracting the gasket 4, there would be interference between these undercut regions and the gasket, so that it would not be possible to obtain a seal between them, in which respect these undercuts determine regions of evident interference and hence of possible sealing discontinuity.

For these reasons, during the initial descent of the mould 2 the gasket 4 is retracted as shown in Figure 1, into the position shown by full lines.

With the gasket 4 in this retracted position the mould 2 is lowered completely onto the tank 1 to the final position shown in Figure 2.

In this figure it can be seen that as the gasket 4 is in a position retracted from its normal position, the mould 2 can descend completely to its closed position on the tank 1 with no interference occurring, even in the undercut regions.

Having reached this position in which the mould 2 is closed on the tank 1, the actuators 8 are operated to expand the gasket until it reaches the final position shown in Figure 3, in which the gasket 4 is compressed against the correspondingly profiled region on the mould 2.

This compression of the gasket 4 against the mould 2 as shown in Figure 3 enables a perfect seal to be achieved in every region of contact between the gasket and mould, so perfectly sealing from each other the half-spaces 6 and 7 defined by the wall 3 within the mould. Hence the position shown in Figure 3 is that of the mould ready for the moulding operation, as described in European patent application No. 476,742.

For the subsequent steps in the moulding process reference should therefore be made to this prior patent application of the present applicant.

Hence as can be seen the invention enables an ideal gasket to be constructed for the process in question which is able to form a perfect seal at each region of the mould profile concerned, even in positions made particularly difficult by the presence of undercuts, grooves or projections on the inner wall of the mould to be sealed.

This sealing effect is made possible by the action of the actuators on the gasket via the metal inserts embedded in it, these having the effect of distributing the actuator thrust along the gasket in a uniform and ideal manner.

## Claims

1. A gasket (4) having the profile of a mould (2) for slush moulding articles of two or more colours such as simulated leather products or the like from materials chosen from thermoplastic, thermosetting and elastomeric resins in powder form, said profile being that along that tine of the mould which defines on the moulded article the corresponding separation line between two different colours, said gasket being fixed to a separation wall (3) which defines two separated half-spaces (6, 7) within the mould and having rigid inserts (5) arranged in it, characterised in that a plurality or said rigid inserts are arranged in said gasket in a predetermined distribution, each being independently controlled by an actuator device (8, 14) to enable the gasket to undergo expansion or retraction movements by operating said inserts.

2. A gasket as claimed in claim 1, characterised in that said rigid inserts are embedded in the gasket so that they project from it in that part which is to be engaged by said actuator.

3. A gasket as claimed in claim 1, characterised in that said rigid inserts are controlled by actuator devices fixed to said separation wall, between said gasket and said separation wall there being interposed an elastic seal (15) which allows said expansion or retraction movement to take place.

4. A gasket as claimed in claim 1, characterised in that said rigid inserts are fixed to a plate (13) controlled by said actuators, each of which comprises a piston (11) which expands or retracts said plate to achieve said gasket expansion or retraction movement respectively.

5. An apparatus comprising a mould (2) for slush molding articles of two or more colours, and a tank (1) for containing materials suitable for forming said colours, these being separated by a separation wall (3), characterised by the fact that on the free edge of said separation wall before engagement with said tank, there is mounted a gasket (4) provided with a plurality of rigid inserts (5) arranged in a predetermined distribution, each being independently controlled by an actuator device to enable the gasket to undergo expansion or retraction movements by operating said inserts.

6. An apparatus as claimed in claim 5, characterised in that said gasket has the profile at said mould along that line thereof which defines on the moulded article the corresponding separation line between two different colours, said profile comprising undercuts.

## Patentansprüche

1. Dichtung (4) mit dem Profil einer Form (2) zum Gießen von Gegenständen mit zwei oder mehr Farben, wie z.B. Kunstlederprodukte oder dergleichen, aus Materialien, welche ausgewählt sind aus thermoplastischen, wärmehärtbaren und elastomeren Harzen in Pulverform, wobei das Profil dasjenige ist, welches entlang der Linie der Form vorkommt, welche an dem gegossenen Gegenstand die entsprechende Trennlinie zwischen zwei verschiedenen Farben definiert, wobei die Dichtung an einer Trennwandung (3) befestigt ist, welche zwei getrennte Halbräume (6, 7) innerhalb der Form definiert und welche in sich starre Einsätze (5) angeordnet enthält, dadurch gekennzeichnet, daß eine Mehrzahl an starren Einsätzen in der Dichtung in einer vorgegebenen Verteilung angeordnet sind, wobei jeder unabhängig mittels einer Betätigungsvorrichtung (8, 14) gesteuert bzw. geregelt wird, um die Dichtung zu befähigen, Expansions- oder Schrumpfbewegungen mittels der Betätigung der Einsätze durchzuführen

2. Dichtung gemäß Anspruch 1, dadurch gekennzeichnet, daß die starren Einsätze in der Dichtung eingebettet sind, so daß sie aus ihr mit dem Teil hervorstehen, welches durch die Betätigungsvorrichtung erfaßt werden soll.

3. Dichtung nach Anspruch 1, dadurch gekennzeichnet, daß die starren Einsätze mittels Betätigungsvorrichtungen gesteuert bzw. geregelt werden, welche an der Trennwandung befestigt sind, wobei zwischen der Dichtung und der Trennwandung eine elastische Abdichtung (15) eingefügt ist, welche die Expansions- und Schrumpfbewegung ermöglicht.

4. Dichtung nach Anspruch 1, dadurch gekennzeichnet, daß die starren Einsätze an einer Platte (13) befestigt sind, welche durch die Betätigungsvorrichtungen gesteuert bzw. geregelt wird, wobei jede einen Kolben (11) umfaßt, welcher die Platte ausfährt oder zurückzieht, uni die Dichtungsexpansion bzw. Schrumpfbewegung zu erzielen.

5. Vorrichtung, umfassend eine Form (2) zum Gießen von Gegenständen mit zwei oder mehr Farben sowie einen Tank (1) zum Aufnehmen von Materialien, welche geeignet sind, um die Farben zu bilden, wobei diese durch eine Trennwandung (3) voneinander getrennt sind, dadurch gekennzeichnet, daß auf der freien Kante der Trennwandung vor deren Anliegen an dem Tank eine Dichtung (4) montiert wird, welche mit einer Mehrzahl an starren Einsätzen (5) versehen ist, welche in einer vorgegebenen Verteilung angeordnet sind, wobei jeder unabhängig durch eine Betätigungsvorrichtung gesteuert bzw. geregelt ist, um die Dichtung Expansions- oder Schrumpfbewegungen durch die Betätigung der Einsätze durchführen zu lassen.

6. Vorrichtung nach Anspruch 5, dadurch gekennzeichnet, daß die Dichtung das Profil der Form entlang von deren Linie aufweist, welche an dem gegossenen Gegenstand die entsprechende Trennlinie zwischen zwei verschiedenen Farben bildet, wobei das Profil Unterschneidungen aufweist.

## Revendications

1. Joint (4) ayant le profil d'un moule (2) permettant le moulage par embouage d'articles de deux couleurs ou plus tels que des produits en similicuir ou analogue, à partir de matériaux choisis parmi les résines élastomères, thermodurcissables et thermoplastiques sous forme de poudre, ledit profil étant celui situé le long de la ligne du moule qui définit, sur l'article moulé, la ligne de séparation correspondante entre deux couleurs différentes, ledit joint étant fixé sur une paroi de séparation (3) qui définit deux demi-espaces (6, 7) séparés à l'intérieur du moule et présentant des inserts (5) rigides disposés à l'intérieur de celui-ci, caractérisé en ce qu'une pluralité desdits inserts rigides est disposée à l'intérieur dudit joint selon une répartition prédéterminée, chacun étant commandé indépendamment par un dispositif activateur (8, 14) afin de permettre au joint de subir des mouvements de rétraction ou d'expansion en faisant fonctionner lesdits inserts.

2. Joint selon la revendication 1, caractérisé en ce que lesdits inserts rigides sont scellés dans le joint de telle façon qu'ils font saillie par rapport à celui-ci et pénètrent dans la pièce qui doit être engrenée par ledit activateur.

3. Joint selon la revendication 1, caractérisé en ce que lesdits inserts rigides sont commandés par des dispositifs activateurs fixés sur ladite cloison de séparation, entre ledit joint et ladite paroi de séparation, un joint d'étanchéité élastique (15) étant disposé pour permettre lesdits mouvements de rétraction ou d'expansion.

4. Joint selon la revendication 1, caractérisé en ce que lesdits inserts rigides sont fixés sur une plaque (13) commandée par lesdits activateurs, dont chacun comprend un piston (11) qui étend ou qui rétracte ladite plaque afin que ledit joint puisse effectuer lesdits mouvements d'expansion ou de rétraction, respectivement.

5. Appareil comprenant un moule (2) permettant le moulage par embouage d'articles de deux couleurs ou plus, et un réservoir (1) destiné à contenir des matériaux adaptés à la formation desdites couleurs, celles-ci étant séparées par une paroi de séparation (3), caractérisé en ce que, sur le bord libre de ladite paroi de séparation, avant l'engrenage avec ledit réservoir, un joint (4) est monté, muni d'une pluralité d'inserts (5) rigides disposés selon une répartition prédéterminée, chacun étant commandé indépendamment par un dispositif activateur afin de permettre au joint de subir des mouvements de rétraction ou d'expansion en faisant fonctionner lesdits inserts.

6. Appareil selon la revendication 5, caractérisé en ce que ledit joint a le profil dudit moule situé le long de la ligne du moule qui définit, sur l'article moulé, la ligne de séparation correspondante entre deux couleurs différentes, ledit profil comprenant des parties évidées.
